# EUROPEAN PATENT SPECIFICATION

(11) **EP 2 597 019 B1**
(45) Date of publication and mention of the grant of the patent: **05.11.2014**
(21) Application number: 12192988.9
(22) Date of filing: 16.11.2012
(51) Int. Cl.: B62J 9/00

(54) **Trunk**
Koffer
Coffre

(30) Priority: 22.11.2011 JP 2011254911; 17.02.2012 JP 2012032407
(43) Date of publication of application: 29.05.2013
(73) Proprietor: Honda Motor Co., Ltd., Tokyo 107-8556 (JP)
(72) Inventor: Taniguchi, Masayuki, Saitama, 351-0193 (JP); Kuroki, Shunji, Saitama, 351-0024 (JP); Suzuki, Shota, Saitama, 351-0193 (JP); Endo, Sakae, Saitama, 351-0193 (JP); Nagasaka, Tatsuhiko, Saitama, 351-0193 (JP)
(74) Representative: Jordan, Volker Otto Wilhelm

(56) References cited:
- EP-A2- 0 734 663
- DE-A1- 3 716 445
- JP-U- 60 034 223
- US-A- 4 852 371
- US-A- 5 439 149

## Description

The present invention relates to a trunk.

Conventionally, as a trunk, there has been known, for example, the one that is described in Japanese Utility Model Publication No. Sho 62-35401. Describing the trunk while using the reference signs used in the document, the trunk has a handle (1), and the handle (1) is attached to the trunk by connecting a male screw (not shown) to an attachment female screw body (14) of a support member (2).

In the above-mentioned conventional trunk, the attachment female screw body (14) or female screw provided as a fixing member for the handle (1) functions only as a fixing member, without having any other function.

DE 37 16 445 A1 which describes all the features of the preamble of claim 1, shows a trunk comprising: a trunk body; a lid provided so as to be openable and closable relative to the trunk body; a handle fixed to an outer portion of the trunk body by a fixing member; and a locking mechanism including a fixed locking piece fixed to the lid, and a movable locking piece which is movably provided on the trunk body and which is engaged with and disengaged from the fixed locking piece to thereby lock and unlock the lid, wherein the fixing member for the handle is disposed inside the trunk body or the lid, and the fixing member constitutes a guide body by which movement of the movable locking piece is guided.

A problem to be solved by the present invention is to provide a trunk such that a fixing member for a handle can be effectively utilized.

In order to solve the above problem, according to the present invention, there is provided a trunk according to claim 1.

According to this trunk, the lid can be put into a locked state by moving the movable locking piece of the locking mechanism so as to engage it with the fixed locking piece, and the lid can be put into an unlocked state by moving the movable locking piece so as to disengage it from the fixed locking piece.

In addition, the guide body by which to guide movement of the movable locking piece is composed of the fixing member for the handle, the fixing member being disposed inside the trunk body or the lid. Therefore, it is unnecessary to separately provide any guide body.

Thus, according to this trunk, the fixing member for the handle can be utilized effectively, and reductions in the number of component parts and the number of assembling steps can be realized. Besides, since the fixing member is disposed inside the trunk body or the lid, the locking mechanism is prevented from being externally worked.

Moreover, since the handle must be firmly fixed to the trunk body or the lid, that guide body for the movable locking piece which is composed of the fixing member for the handle is necessarily configured to be stout. Consequently, the strength of the locking mechanism can also be enhanced automatically.

The above trunk has a configuration in which a plurality of the fixing members are provided, the movable locking piece is a slidable movable locking piece, and sliding of the movable locking piece is guided by two or more fixing members.

This configuration ensures that smoother sliding operations of the movable locking piece can be obtained, and the strength of the locking mechanism can also be enhanced, as compared with the case where sliding of the movable locking piece is guided by a single fixing member.

The above trunk has a configuration wherein the movable locking piece is provided with slots in which the two or more fixing members are relatively slidably fitted, the slots are arranged along a same straight line directed in a sliding direction, and an engaging direction of the movable locking piece and the fixed locking piece is set to be orthogonal to the sliding direction and orthogonal to a fixing direction of fixing by the fixing members.

This configuration ensures that, since the movable locking piece is guided by the two or more fixing members and the slots guided by the fixing members are arranged along the same straight line directed in the sliding direction, the movable locking piece is guided smoothly. Also, the configuration ensures that, since the engaging direction of the movable locking piece and the fixed locking piece is orthogonal to the sliding direction and orthogonal to the fixing direction of fixation by the fixing members, a force exerted on the movable locking piece at the time of an attempt to open the lid in a locked state is efficiently received by the two or more fixing members, so that the strength of the locking mechanism can also be enhanced more.

The above trunk may have a configuration wherein an engaging part between the movable locking piece and the fixed locking piece is provided between the fixing member and the fixing member.

This ensures that a force exerted on the movable locking piece at the time of an attempt to open the lid in the locked state is efficiently received by the two or more fixing members, so that the strength of the locking mechanism can also be enhanced further.

The above trunk may have a configuration wherein a partition member is provided by which the movable locking piece as well as an engaging position between the movable locking piece and the fixed locking piece is partitioned from an inside space of the trunk.

This configuration ensures that the contents of the trunk can be prevented from getting caught in the engaging part between the movable locking piece and the fixed locking piece, and that the appearance quality when the lid is opened can be enhanced.

The above trunk may further include:
a trunk engaging/disengaging mechanism including an engaging hook by which the trunk is detachably mounted to a saddle type vehicle, and an operating part for operating the engaging hook; and
a lock mechanism by which an unlocking operation in the locking mechanism and a disengaging operation for disengaging the engaging hook from a vehicle-side mount part are simultaneously restrained, interlockedly with a turning operation of a key.

This configuration ensures that the trunk can be detachably mounted to the saddle type vehicle by an operation of the engaging hook effected through an operation of the operating part in the trunk engaging/disengaging mechanism. Also, the configuration ensures that the locking mechanism can restrain the disengaging operation for disengaging the engaging hook from the vehicle-side mount part and the unlocking operation in the locking mechanism, interlockedly with a turning operation of the key. Accordingly, a security function required of a trunk for vehicle use can be obtained by only an operation of a single key (for example, a key for the saddle type vehicle) in a single keyhole.

The above trunk desirably has a configuration wherein the trunk body is made to be larger in capacity as compared to the lid, and the handle, the movable locking piece and the trunk engaging/disengaging mechanism are provided in the trunk body.

This configuration ensures that the lid can be opened while the trunk is kept mounted to the saddle type vehicle, and that the handle can be provided at a position suitable for securing weight balance when the trunk is carried by gripping the handle. Accordingly, it is possible to realize a trunk which is convenient in use as a trunk for saddle type vehicle.

The above trunk may have a configuration wherein the lock mechanism includes a key cylinder turned interlockedly with the turning operation of the key, and a link by which a rotating operation of the key cylinder is converted into a sliding motion.

This configuration makes it possible to realize sliding operations of the movable locking piece by using a key cylinder which generally is easily available.

The above trunk desirably has a configuration wherein an included angle between the sliding direction of the movable locking piece and a straight line interconnecting linking parts of the link is not more than 45 degrees.

This configuration ensures that a rotating motion of the key cylinder can be efficiently converted into a sliding motion of the movable locking piece.

The above trunk may have a configuration wherein the key cylinder is located outside the trunk body, the movable locking piece is located inside the trunk body, and the link penetrates a hole in the trunk body and is provided, outside the hole in the trunk body, with a projected shape directed downward in the state where the trunk is mounted to the saddle type vehicle.

This configuration ensures that the movable locking piece and the key cylinder are disposed separately in the inside and outside of the trunk body, so that the degree of freedom in layout of these members can be enhanced. If such a configuration is not provided with any countermeasure, water may penetrate into the trunk by flowing along the link which penetrates the hole in the trunk body. According to the present invention, however, the link has the projected shape directed downward in the state where the trunk is mounted to the saddle type vehicle, and, therefore, the water tending to penetrate into the trunk by flowing along the link can be prevented by the projected shape from penetrating into the trunk.
FIG. 1 is a plan view of an embodiment of a trunk according to the present invention.
FIG. 2 is a partly omitted side view of the same (a front view of FIG. 1).
FIG. 3 is a sectional view taken along line 3-3 of FIG. 2.
FIG. 4 is a sectional view taken along line 4-4 of FIG. 1.
FIG. 5 is a sectional view taken along line 5-5 of FIG. 1.
FIG. 6 is a sectional view taken along line 6-6 of FIG. 1.
FIG. 7 is an enlarged sectional view taken along line 7-7 of FIG. 3.
FIG. 8 is a front sectional view of a trunk engaging/disengaging mechanism 40 (a sectional view taken along line 8-8 of FIG. 9).
FIG. 9 is a side view of FIG. 8.
FIG. 10 is a sectional view taken along line 10-10 of FIG. 8.
FIG. 11 is a sectional view taken along line 11-11 of FIG. 8.
FIG. 12 is a front view of a connecting link.
FIG. 13 is a perspective view of a connection structure between an attachment member 44 of the trunk engaging/disengaging mechanism 40 and upper hook members 21 and 22, as viewed from the inside of the trunk.
FIG. 14 is a perspective view showing a pair of left and right vehicle trunks 30.
FIG. 15 is a perspective view showing an example of mounting of the vehicle trunk 30 to a saddle type vehicle 10.
FIG. 16 is a perspective view showing an example of mounting of the vehicle trunk 30 to the saddle type vehicle 10.
FIG. 17 is a perspective view showing an opened state of the vehicle trunk 30.
FIG. 18 is a view showing a modification of a lock mechanism 50 and a locking mechanism 58 (a view corresponding to an enlarged sectional view taken along line 7-7 of FIG. 3).
FIG. 19 is a perspective view of a modification of an attachment member 44 and the lock mechanism 50, as viewed from the inside of the trunk.

Now, an embodiment of the trunk according to the present invention will be described below, referring to the drawings. Incidentally, in the drawings, the same or corresponding parts are denoted by the same reference signs.

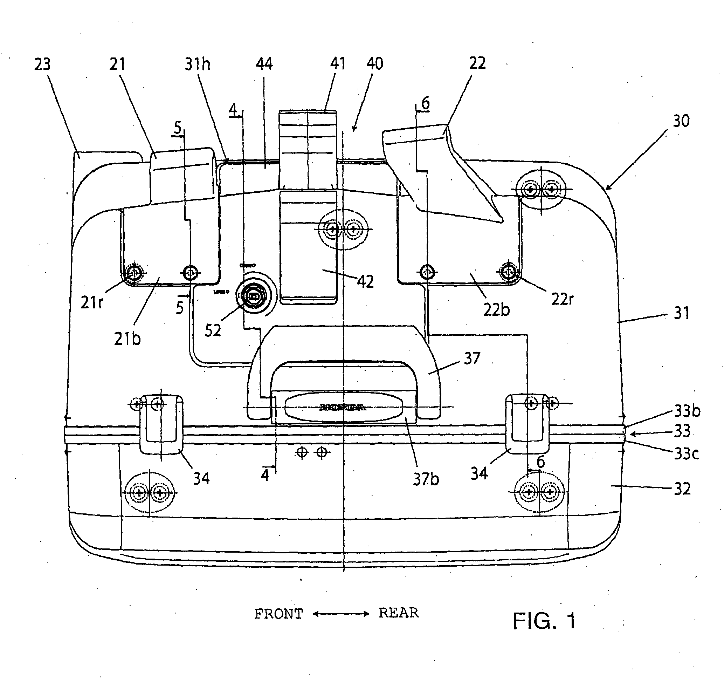

As shown in FIGS. 1 to 4, a trunk 30 in the present embodiment includes a trunk body 31, a lid 32 provided to be openable and closable relative to the trunk body 31, a handle 37 to be gripped at the time of carrying the trunk 30, and a locking mechanism 58 by which to lock and unlock the lid 32.

The handle 37 can be fixed to an outer portion of either of the trunk body 31 and the lid 32 by fixing members 38; in this embodiment, the handle 37 is fixed to the trunk body 31.

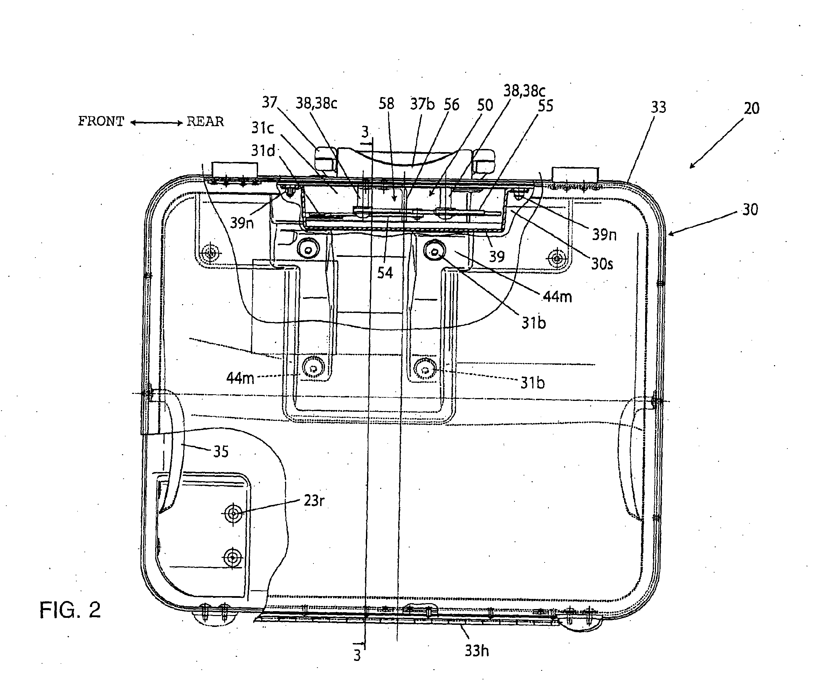

As shown in FIGS. 2 to 4 and 7, the locking mechanism 58 has: a fixed locking piece 56 fixed to the lid 32; and a movable locking piece 55 which is movably provided on the trunk body 31 and which is engaged with and disengaged from the fixed locking piece 56 to thereby lock and unlock the lid 32. The locking mechanism 58 may also be configured by providing the trunk body 31 with the fixed locking piece 56 and providing the lid 32 with the movable locking piece 55.

The fixing members 38 of the handle 37 are disposed inside the trunk body 31, and the fixing members 38 constitute a guide body by which movement of the movable locking piece 55 is guided. Incidentally, in the case where the handle 37 is provided on the lid 32, the fixing members 38 are disposed inside the lid 32.

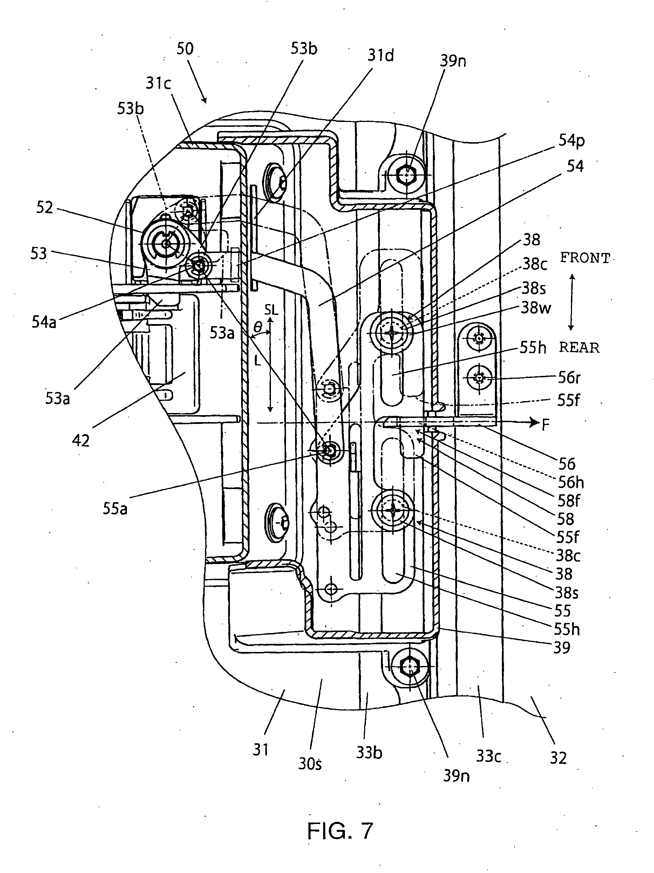

According to this trunk 30, when the movable locking piece 55 of the locking mechanism 58 is moved and engaged with the fixed locking piece 56 as indicated by solid lines in FIG. 7, the lid 32 can be locked (be put into a locked state). In addition, when the movable locking piece 55 is moved and disengaged from the fixed locking piece 56 as indicated by imaginary lines in FIG. 7, the lid 32 can be unlocked (be put into an unlocked state).

Besides, the guide body by which movement of the movable locking piece 55 is guided is composed of the fixing members 38 of the handle 37 which are disposed inside the trunk body 31 (or the lid 32). Therefore, it is unnecessary to separately provide a guide body.

According to this trunk 30, therefore, the fixing members 38 of the handle 37 can be utilized effectively, and reductions in the number of component parts and in the number of assembling steps can be realized. In addition, since the fixing members 38 are disposed inside the trunk body 31 (or the lid 32), in other words, in the trunk 30, the locking mechanism 58 is prevented from being externally worked.

Moreover, since the handle 37 must be firmly fixed to the trunk body 31 (or the lid 32), that guide body for the movable locking piece 55 which is composed of the fixing members 38 for the handle 37 is also robust in structure. Consequently, the locking mechanism 58 can automatically be enhanced in strength.

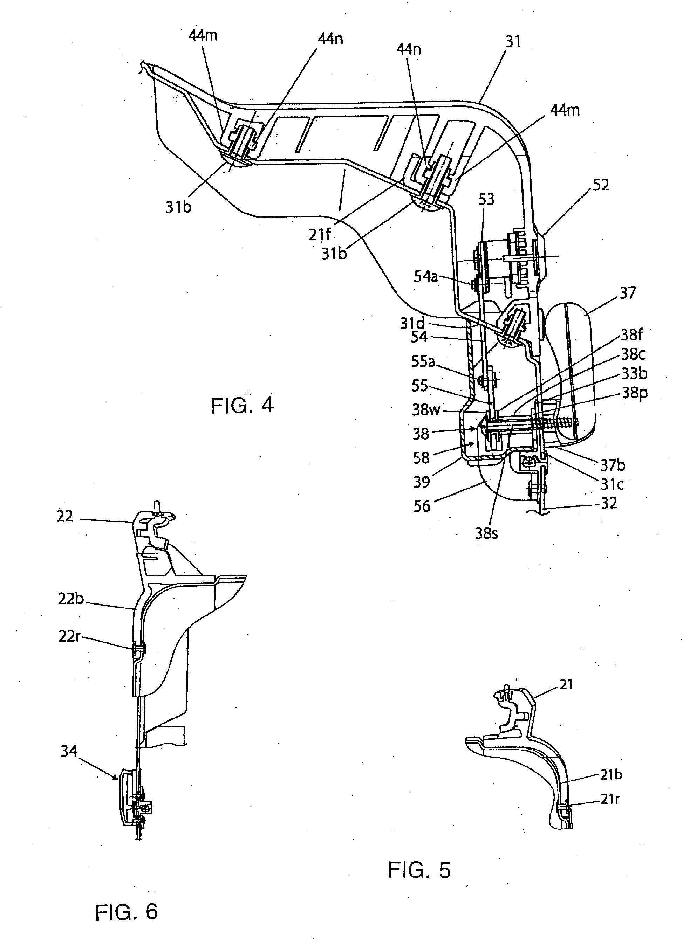

The fixing member 38 may have any configuration insofar as it can fix the handle 37 from the inside of the trunk 30 and it can guide the movable locking piece 55. In this embodiment, as shown in FIGS. 4 and 7, the fixing member 38 mainly includes a screw (in the example shown, a tapping screw) 38s, a collar 38c mounted to the screw 38s, a flanged collar 38f, a washer 38w, and a plate 38p to be put into contact with the inside of a body-side frame 33b which will be described later. On the other hand, the handle 37 has a base member 37b for fixation to the trunk 30.

The handle 37 is firmly fixed to the trunk body 31 by a method wherein the base member 37b and the plate 38p are so disposed that a casing 31 c and the body-side frame 33b of the trunk body 31 are interposed therebetween, the collars 38c and the flanged collars 38f are mounted to the screws 38s, further the washers 38w are so mounted that the movable locking piece 55 is disposed between the flanged collars 38f and the washers 38w, and the screws 38s are put into screw engagement with the base member 37b and tightened.

In the thus fixed state, a space for guiding the movable locking piece 55 is secured between a flange portion of the flanged collar 38f and the washer 38w.

The handle 37 is so mounted as to be turnable relative to the base member 37b.

As shown in FIGS. 2 and 7, a plurality (in the example shown, two) of the fixing members 38 are provided, the movable locking piece 55 is a slidable movable locking piece 55, and sliding of the movable locking piece 55 is guided by the two or more (in the example shown, two) fixing members 38.

This configuration makes it possible to realize smoother sliding motions of the movable locking piece 55, as compared with the case where the sliding of the movable locking piece 55 is guided by a single fixing member 38. In addition, the strength of the locking mechanism 58 can also be enhanced by the configuration.

As shown in FIG. 7, the movable locking piece 55 is provided with slots (in the example shown, two slots) 55h, 55h in which the two or more fixing members 38 are relatively slidably fitted. The slots 55h, 55h are arranged along the same straight line directed in the sliding direction (the vertical direction in FIG. 7), and an engaging direction F in which the movable locking piece 55 and the fixed locking piece 56 are engaged is set to be orthogonal to the sliding direction and orthogonal to the fixing direction of fixing by the fixing members 38 (the fixing direction is the axial direction of each of the screws 38s, namely, the direction orthogonal to the sheet surface of FIG. 7).

According to this configuration, the movable locking piece 55 is guided by the two or more fixing members 38, and the slots 55h guided by these fixing members 38 are arranged along the same straight line directed in the sliding direction, whereby smooth guiding of the movable locking piece 55 is ensured. In this configuration, besides, the engaging direction F of the movable locking piece 55 and the fixed locking piece 56 is set to be orthogonal to the sliding direction and orthogonal to the fixing direction of the fixing member 38. This ensures that a force (F) exerted on the movable locking piece 55 at the time of an attempt to open the lid 32 in the locked state is received efficiently by the two or more fixing members 38. Consequently, the strength of the locking mechanism 58 can also be enhanced more.

An engaging part 58f between the movable locking piece 55 and the fixed locking piece 56 is provided between the fixing member 38 and the fixing member 38.

This configuration ensures that the force (F) exerted on the movable locking piece 55 at the time of an attempt to open the lid 32 in the locked state is more efficiently received by the two or more fixing members 38, so that the strength of the locking mechanism 58 can also be further enhanced.

As shown in FIGS. 2 to 4 and 7, the trunk 30 has a cover 39 as a partition member by which the movable locking piece 55 as well as the engaging part (58f) of the movable locking piece 55 and the fixed locking piece 56 is partitioned from an inside space 30s of the trunk.

This configuration ensures that the contents of the trunk 30 can be prevented from getting caught in the engaging part (58f) between the movable locking piece 55 and the fixed locking piece 56, and that the appearance quality when the lid is opened can be enhanced.

The cover 39 is fixed to the inner surface of the trunk 30 by box nuts 39n (see FIGS. 2 and 7).

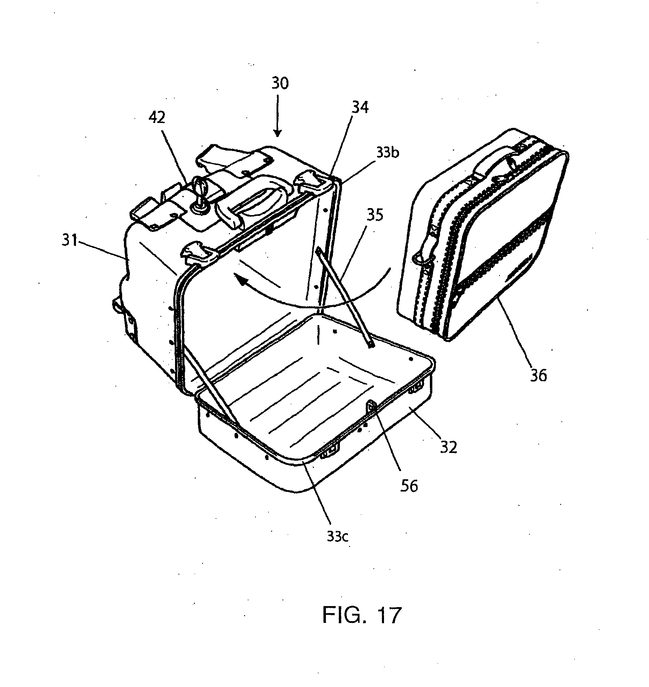

As shown in FIGS. 1 to 3, the trunk 30 has a metallic frame 33 and catches 34, 34. With the catches 34, 34 disengaged and the metallic frame 33 opened, the lid 32 can be opened (see FIG. 17).

The metallic frame 33 includes: a body-side frame 33b provided at an aperture edge portion of the trunk body 31; a lid-side frame 33c provided at an aperture edge portion of the lid 32; and a hinge 33h by which both the frames 33b and 33c are turnably interlinked at their lower portions. The lid 32 can be opened and closed, with the hinge 33h as a center of turning (see FIG. 17). In FIG. 17, reference sign 35 denotes a turn-restraining belt which interlinks both the frames 33b and 33c so as to restrain a turning angle of the frames, and reference sign 36 denotes an inner bag.

The hinge 33h is fixed to both the frames 33b and 33c by rivets 33r.

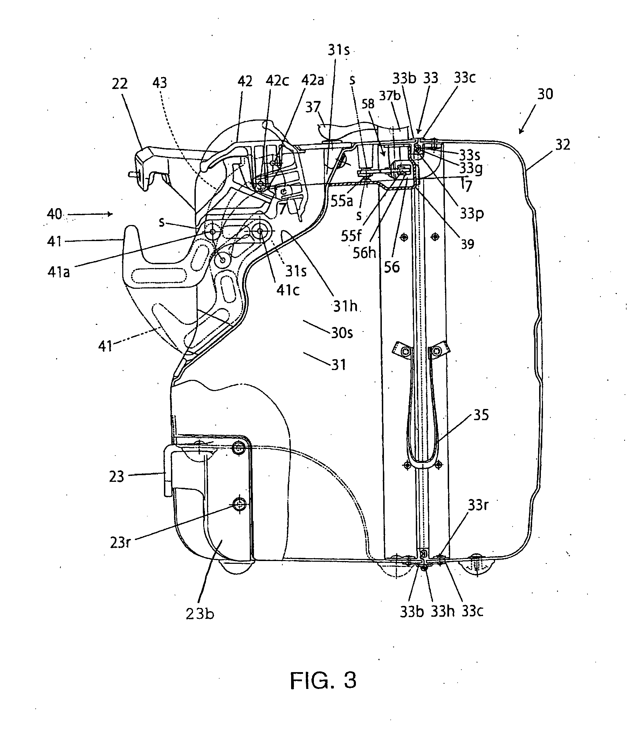

As shown in FIG. 3, the body-side frame 33b is provided along the inside of the aperture edge thereof with a rib 33p projecting to the rid 32 side. On the other hand, the lid-side frame 33c is provided along the inside of the aperture edge thereof with a recessed groove 33g for accepting the rib 33p, and is provided with a tubular seal 33s contained in the recessed groove 33g. When the lid 32 is closed, a tip portion of the rib 33p enters into the recessed groove 33g, and comes into contact with the tubular seal 33s in the manner of getting caught in the tubular seal 33s. Such a configuration promises enhances sealing properties.

As shown in FIGS. 1, 3 and 15, the trunk 30 includes:
a trunk engaging/disengaging mechanism 40 including an engaging hook 41 by which the trunk 30 is detachably mounted to a saddle type vehicle 10, and an operating lever 42 as an operating part for operating the engaging hook 41; and a lock mechanism 50 (see FIG. 7) by which an unlocking operation in the locking mechanism 58 and a disengaging operation for disengaging the engaging hook 41 from a vehicle-side mount part 13 are simultaneously restrained, interlockedly with a turning operation of a key 51.

This configuration ensures that the trunk 30 can be mounted to and detached from the saddle type vehicle 10 by an operation of the engaging hook 41 through an operation of the operating part 42 in the trunk engaging/ disengaging mechanism 40. In addition, both the disengaging operation for disengaging the engaging hook 41 from the vehicle-side mount part 13 and the unlocking operation in the locking mechanism 58 can be restrained by the lock mechanism 50 interlocked with the turning of the key 51. Accordingly, a security function required of a trunk for vehicle use can be obtained by only an operation of a single key 51 (for example, a key 51 for the saddle type vehicle) in a single keyhole.

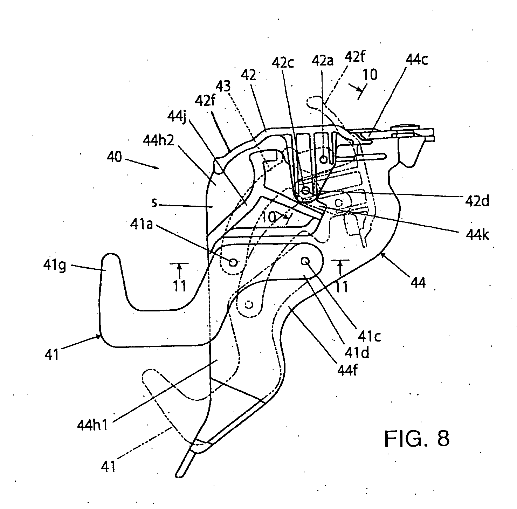

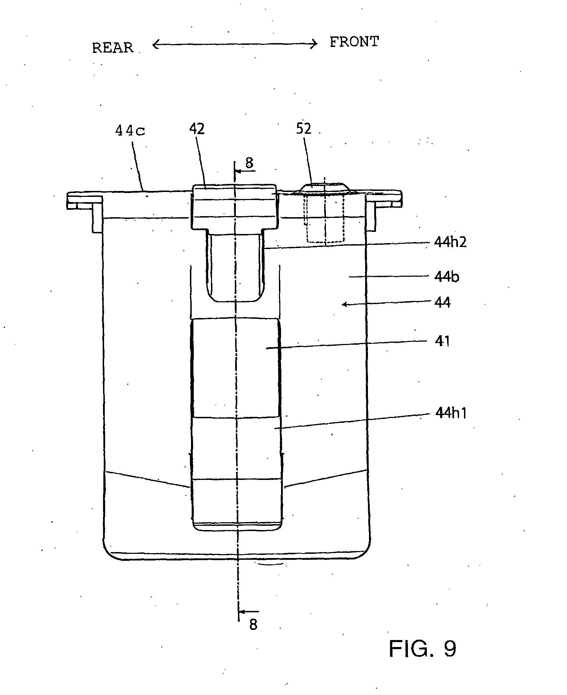

As shown in FIGS. 8 to 11 also, the trunk engaging/disengaging mechanism 40 has a configuration wherein the engaging hook 41 and the operating lever 42 are turnably attached to the same member 44, the engaging hook 41 and the operating lever 42 are interconnected by a connecting link 43 through shafts 41 a and 42a, and both end portions 41 b and 42b of the shafts 41 a and 42a are put in contact with inner surfaces s of the same member 44, whereby movement in the axial direction is restrained.

This configuration enhances the degree of freedom in layout, due to the intermediate presence of the connecting link 43. While the connecting link 43 is connected through the shafts 41a and 42a, it is unnecessary to equip the shafts 41 a and 42a with circlips, and, therefore, an increase in the number of component parts can be obviated.

The above-mentioned member 44 is an attachment member for attaching the trunk engaging/disengaging mechanism 40 to the trunk 30.

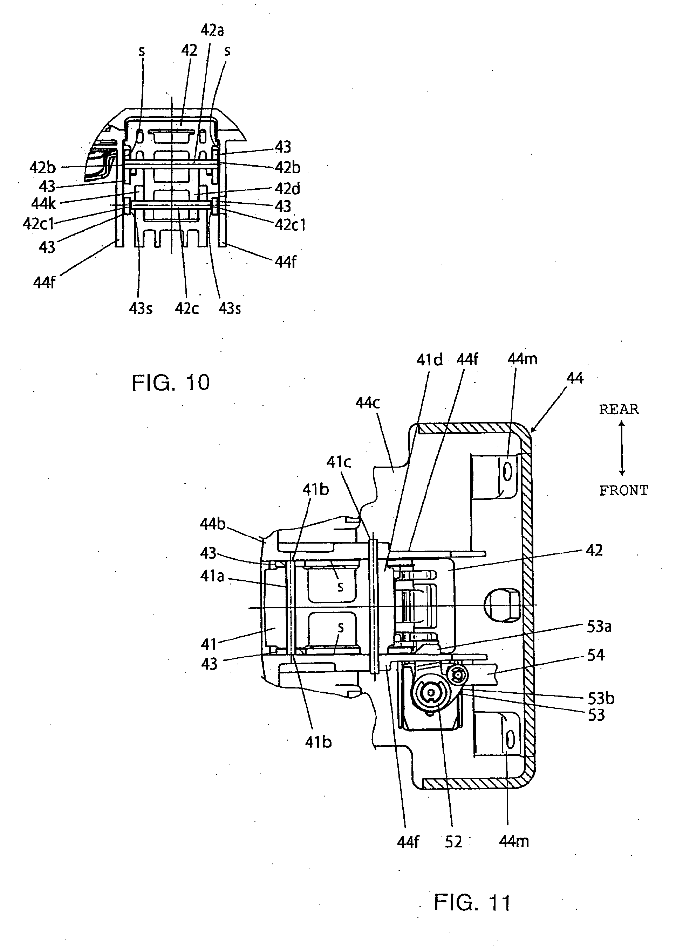

The attachment member 44, which is an integrally molded article, includes: a side plate 44b provided with a first opening 44h1; a top plate 44c provided at an upper portion of the side plate 44b; a second opening 44h2 provided in an area ranging from an upper portion of the side plate 44b to the top plate 44c; support plates 44f, 44f provided to interconnect the side plate 44b and the top plate 44c on both the front and rear sides of the first opening 44h1 and the second opening 44h2; a transverse section 44j which interconnects the support plates 44f, 44f; a shaft support section 44k (FIGS. 8 and 10) projecting from the transverse section 44j toward the inside of the trunk; and a plurality of (in the example shown, four (see FIG. 2)) attachment sections 44m for attachment to the trunk body 31.

The engaging hook 41 is provided at the first opening 44h1, and its base portion 41d is turnably supported between the support plates 44f, 44f by a shaft 41 c. The shaft 41 c is fixed to the support plates 44f, 44f. The shaft 41c is accompanied by a surface (in this case, an outer surface 31s (see FIG. 3)) of the trunk which surface is set proximate to both ends of the shaft 41 c so that the proximate parts constitute restraining surfaces (surfaces for restraining the shaft from slipping out of position) s, whereby the shaft 41c can be prevented from slipping off from the support plates 44f, 44f.

The operating lever 42 is provided at the second opening 44h2, and its base portion 42d is turnably supported on the shaft support section 44k by a shaft 42c. The shaft 42c is fixed to the shaft support section 44k. The shaft 42c has its end portions 42c1, 42c1 (FIG. 10) in contact with an inner surface 43s of the connecting link 43, whereby the shaft 42c is prevented from slipping off from the shaft support section 44k.

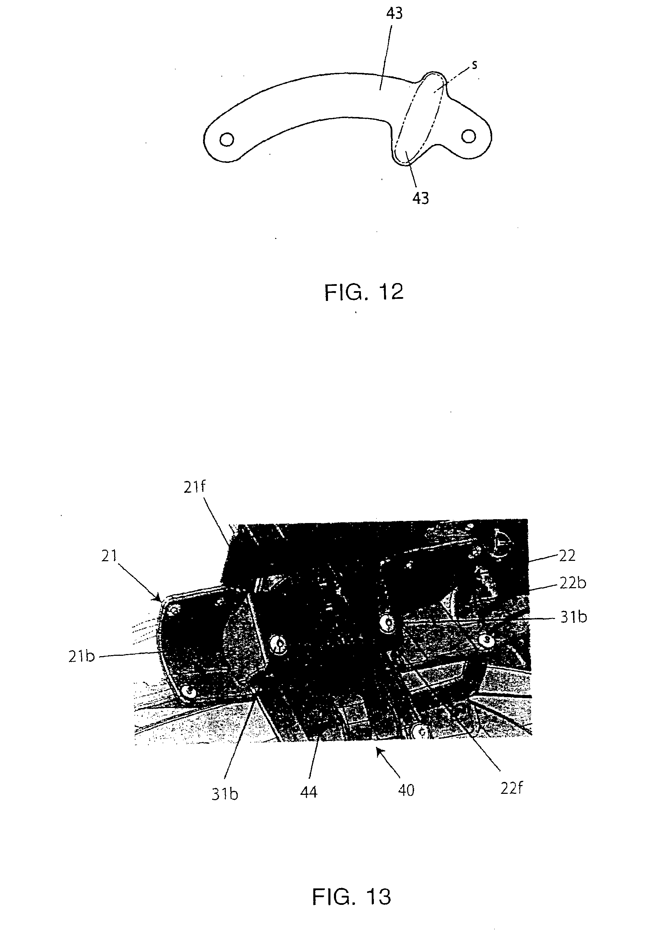

The connecting link 43 is configured by disposing a plate-formed link as shown in FIG. 12 on both sides of the engaging hook 41 and the operating lever 42 (FIGS. 10 and 11). The connecting link 43 is turnably connected to the engaging hook 41 by the above-mentioned shaft 41a, and is turnably connected to the operating lever 42 by the above-mentioned shaft 42a. Of the connecting link 43, at least a part (see region s in FIG. 12) is disposed on the outer side relative to the end portion 42c1 of the shaft 42c of the operating lever 42, to constitute the restraining surface s for the shaft 42c. In FIG. 12, the region indicated by imaginary line s is the restraining surface. Incidentally, where the engaging hook 41 and the operating lever 42 are positionally changed over in the widthwise direction, slip-off of the shaft 41 c of the engaging hook 41 can also be restrained by the connecting link 43.

The restraining surfaces s for the shafts 41 a and 42a are composed of inner surfaces of the support plates 44f, 44f. Incidentally, the engaging hook 41 and the operating lever 42 can also be turnably mounted to other members, correspondingly; in that case, the restraining surfaces s can be composed of inner surfaces of the other members. In any way, where the members to which the engaging hook 41 and/or the operating lever 42 is turnably mounted are composed of a material different from the trunk 30, enhanced durability and rigidity can be ensured. As a result, a reduction in the weight of the trunk 30 can be promised.

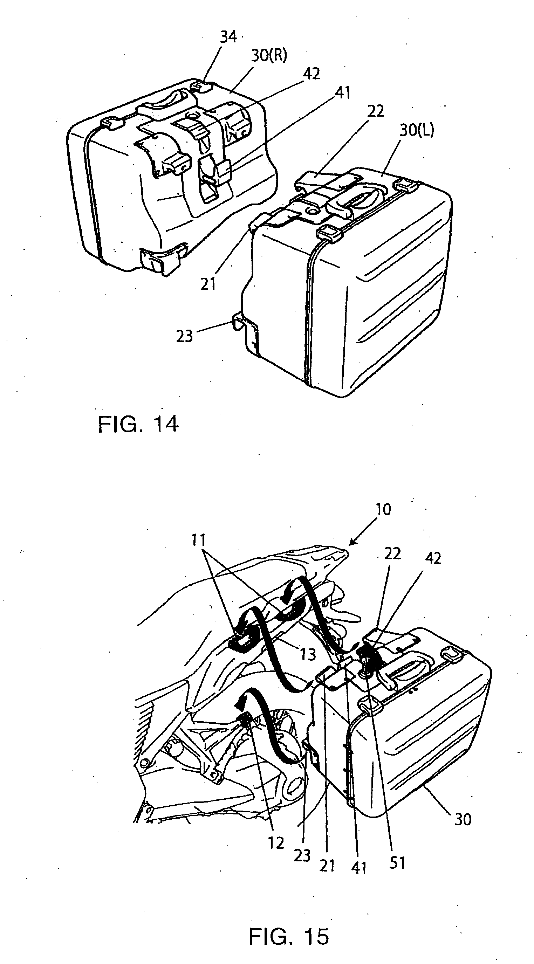

In FIG. 8, when the operating lever 42 is turned as indicated by imaginary line by pulling an operating section 42f of the operating lever 42 outward, an interlocking action of the connecting link 43 causes the engaging hook 41 to be turned downward as indicated by imaginary line, whereby engagement with the vehicle-side mount part 13 (FIG. 15) by a hook section 41 g is released.

The trunk engaging/disengaging mechanism 40 as above-described is configured as a unit, and is assembled onto the trunk 30.

As shown in FIGS. 1 to 4, the trunk body 31 is provided with a recess 31 h in which to accommodate the trunk engaging/disengaging mechanism 40.

The trunk engaging/disengaging mechanism 40 is fitted into the recess 31 h of the trunk body 31, and is fixed in situ by bolts 31 b.As shown in FIG. 4, nuts 44n are embedded in the attachment sections 44m, and the bolts 31 b are put into engagement with the nuts 44n, whereby the trunk engaging/disengaging mechanism 40 is fixed to the trunk body 31.

As shown in FIGS. 1 to 6, upper hook members 21 and 22 are provided at front and rear parts of an inner upper portion of the trunk 30, and a lower hook member 23 is provided at a front part of an inner lower portion of the trunk 30.

The upper hook members 21 and 22 have their curved plate-formed base portions 21 b and 22b each fixed to the trunk body 31 by a plurality of rivets 21 r and 22r. In addition, as shown in FIG. 13, fixing pieces 21f and 22f integrally provided on the inner side of the base portions 21 b and 22b are fixed to the trunk body 31, in the manner of being co-fastened with the attachment section 44m of the above-mentioned attachment member 44 by the bolts 31 b. Consequently, the attachment member 44 and the upper hook members 21 and 22 form a so-called trinity, whereby rigidity and accuracy in attachment to the trunk body 31 can be enhanced.

The lower hook member 23 has its curved plate-formed base portion 23b secured to the trunk body 31 by a plurality of rivets 23r, thereby being fixed to a front lower corner portion of the trunk body 31.

The lock mechanism 50 restrains an opening operation of the lid 32 relative to the trunk body 31, and restrains an unlocking operation of the engaging hook 41 from the vehicle-side mount part 13 (FIG. 15).

As shown in FIG. 7, the lock mechanism 50 includes: a key cylinder 52 turned with the key 51 (see FIG. 15); a lever 53 turned by the key 51 through the key cylinder 52; a link 54; and the above-mentioned movable locking piece 55.

The lever 53 has a first arm 53a and a second arm 53b. One end of the link 54 is connected to the second arm 53b by a shaft 54a, and the movable locking piece 55 is connected to the other end of the link 54 by a shaft 55a.

The movable locking piece 55 is provided with a hook 55f; on the other hand, the above-mentioned fixed locking piece 56 which can be engaged with and disengaged from the hook 55f is fixed to the lid 32 by rivets 56r.

When the key 51 is in a lock position, as indicated by solid lines in FIGS. 7 and 11, the first arm 53a is located on the lower side of the operating lever 42, thereby inhibiting the operating lever 42 from turning in an opening direction (in a direction for releasing the engagement made by the engaging hook 41). Besides, as shown in FIGS. 3 and 7, the hook 55f of the movable locking piece 55 enters into an engaging hole 56h in the fixed locking piece 56, thereby inhibiting the lid 32 from being opened.

When the key 51 has been turned from the lock position and is in an unlock position (open position (FIG. 15)), as indicated by imaginary line in FIG. 7, the first arm 53a is retracted from the lower side of the operating lever 42, thereby permitting the operating lever 42 to turn in the opening direction (the direction for releasing the engagement made by the engaging hook 41).In addition, as indicated by imaginary line in FIG. 7, the hook 55f of the movable locking piece 55 retracts (slips off) from the engaging hole 55h in the fixed locking piece 56 in the manner of interlocking with the lever 53, thereby permitting the lid 32 from being opened.

Since the lock mechanism 50 has the link 54, the degree of freedom in layout is enhanced.

In addition, the lock mechanism 50 has the key cylinder 52 which is turned interlockedly with a turning operation of the key 51, and the link 54 by which the rotating motion of the key cylinder 52 is converted into a sliding motion. Therefore, sliding operations of the movable locking piece 55 can be realized by use of the key cylinder 52 which generally is easily available.

As shown in FIG. 7, the included angle θ between the sliding direction SL of the movable locking piece 55 and a straight line L interconnecting the shafts 54a and 55a of the link 54 is set to be not more than 45 degrees.

This configuration ensures that a rotating motion of the key cylinder 52 can be efficiently converted into a sliding motion of the movable locking piece 55. This is because the ratio of a component of force in the sliding direction to a force for turning the key cylinder 52, or the lever 53, can be set high.

As shown in FIGS. 1 and 3, the trunk body 31 is greater than the lid 32 in capacity, and the handle 37, the movable locking piece 55 and the trunk engaging/disengaging mechanism 40 are provided in the trunk body 31.

This configuration ensures that the lid 32 can be opened while the trunk 30 is kept mounted to the saddle type vehicle 10, and that the handle 37 can be provided at a position suitable for securing weight balance when the trunk 30 is carried by gripping the handle 37. As a result, it is possible to realize a trunk which is convenient in use as a trunk for saddle type vehicle.

As shown in FIG. 14, the trunk 30 for vehicle as above-described is normally prepared in a left-right pair (30(L, R)), and the pair of trunks 30L and 30R are detachably mounted to the left and right of the vehicle, respectively.

Now, the mounting procedure and the like will be described below, taking the left vehicle trunk 30(L) as a representative of the left and right vehicle trunks.

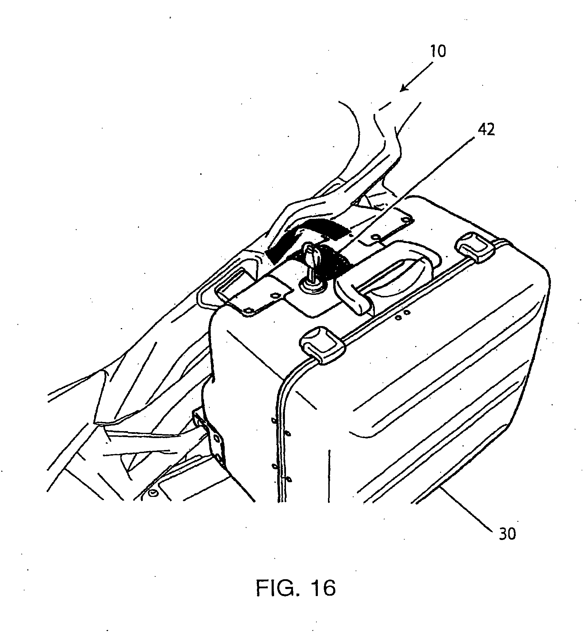

In mounting the trunk 30, first, as shown in FIG. 15, the key 15 is set into the open position, thereby setting the operating lever 42 up and setting the engaging hook 41 down (see imaginary lines in FIG. 3). Then, the upper hook members 21 and 22 and the lower hook member 23 are hooked respectively on mount parts 11, 11 and 12 provided on the vehicle (e.g., motorcycle) 10. Next, as indicated by solid lines in FIGS. 16 and 3, the operating lever 42 is lowered to engage the engaging hook 41 with the mount part 13 (FIG. 15) provided on the vehicle 10. This ensures that the hooks 21, 22, 23 and 41 of the trunk 30 are prevented from being disengaged from the mount parts of the vehicle. Thereafter, the key 51 is turned into the lock position and drawn out, whereby operations on the operating lever 42 are inhibited and the lid 32 is prevented from opening.

Detachment of the trunk 30 can be performed following a reverse procedure to the above-mentioned.

With the key 51 put into the open position, the lid 32 can be opened by disengaging the catches 34, 34, as shown in FIG. 17.

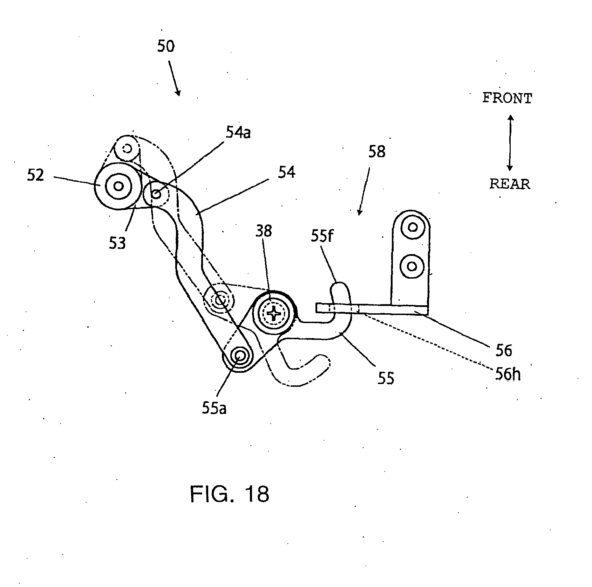

FIG. 18 shows a modification of the lock mechanism 50 and the locking mechanism 58.

The locking mechanism 58 shown in the figure differs from the above-described one in that the movable locking piece 55 to be engaged with and disengaged from the fixed locking piece 56 is turnably mounted by the fixing member 38. The fixing member 38 constitutes a guide body by which movement (in this case, turning) of the movable locking piece 55 is guided.

When the movable locking piece 55 is moved as indicated by solid line to be engaged with the fixed locking piece 56, the lid 32 can be put into a locked state. In addition, with the movable locking piece 55 moved as indicated by imaginary line to be disengaged from the fixed locking piece 56, the lid 32 can be put into an unlocked state.

In this configuration, also, the guide body by which to guide the movement of the movable locking piece 55 is composed of the fixing member 38 disposed inside the trunk body 31 (or the lid 32). In this configuration, therefore, it is unnecessary to separately provide a guide body.

The lock mechanism 50 shown in FIG. 18 transmits a turning operation of the lever 53, which is turned by the key 51 through the key cylinder 52, to the movable locking piece 55 through the link 54.Incidentally, in the figure, the first arm 53a of the lever 53 is omitted, and its operation is the same as above-described.

When the key 51 is in the lock position, as indicated by solid lines, the hook 55f of the movable locking piece 55 has entered into the engaging hole 56h in the fixed locking piece 56, thereby inhibiting the lid 32 from being opened.

When the key 51 has been turned from the lock position and is in the unlock position (open position (FIG. 15)), as indicated by imaginary lines, the hook 55f of the movable locking piece 55 has been retracted (has slipped off) from the engaging hole 56h of the fixed locking piece 56 in the manner of interlocking with the lever 53, thereby permitting the lid 32 to be opened.

As shown in FIGS. 4 and 7, the key cylinder 52 is located outside the trunk body 31 (the casing 31c), and the movable locking piece 55 is located inside the trunk body 31 (the casing 31 c). The link 54 penetrates a hole 31 d provided in the trunk body 31 (the casing 31c).

This configuration ensures that the movable locking piece 55 and the key cylinder 52 are disposed separately in the inside and outside of the trunk body 31, so that the degree of freedom in layout of these members can be enhanced. If such a configuration is not provided with any countermeasure, water may penetrate into the trunk by flowing along the link 54 which penetrates the hole 31d in the trunk body 31.

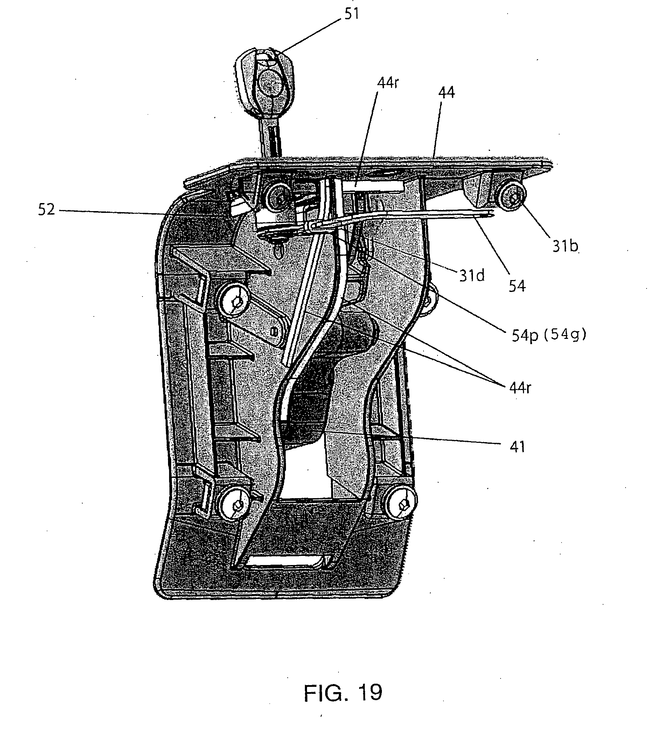

In view of this, it is desirable that, as shown in FIGS. 19 and 7, the link 54 is provided, outside the hole 31d in the trunk body 31, with a projected shape 54p directed downward in the state where the trunk 30 is mounted to the saddle type vehicle.

This configuration ensures that the water tending to penetrate into the trunk by flowing along the link 54 can be prevented by the projected shape 54p from penetrating into the trunk. The projected shape 54p can be formed by a method in which a short round slice of a rubber tube 54g is mounted onto the link 54, as shown in FIG. 19. Alternatively, though not shown, the projected shape directed downward can be formed integrally with the link 54 by pressing or welding or the like.

In addition, if the configuration including the hole 31 d as above-mentioned is not provided with any countermeasure, there would arise a problem that when a spray from a car washer or the like impinges directly onto the gap between the attachment member 44 and the engaging hook 41 from the outside, water may penetrate into the trunk via the hole 31d.

In view of this, as shown in FIG. 19, the attachment member 44 is provided, in the vicinity of the hole 31d in the trunk body 31, with a rib 44r which forms a labyrinth seal together with the trunk body 31 on the outside of the hole 31d. Such a rib 44r blocks the water tending to flow toward the hole 31 d in the trunk body 31.

The rib 44r can be formed integrally with the attachment member 44, or may be configured by a method in which a rubber fitted with a pressure sensitive adhesive tape is adhered to the attachment member 44.

While an embodiment of the present invention has been described above, the invention is not to be restricted to the above embodiment, and appropriate modifications are possible within the scope of the invention.

The invention provides a trunk such that a fixing member for a handle can be utilized effectively. The trunk includes: a trunk body 31; a lid 32 provided to be openable and closable relative to the trunk body 31; a handle 37 fixed to an outer portion of the trunk body 31 by a fixing member 38; and a locking mechanism 58 including a fixed locking piece 56 fixed to the lid 32, and a movable locking piece 55 which is movably provided on the trunk body 31 and which is engaged with and disengaged from the fixed locking piece 56 to thereby lock and unlock the lid 32. The fixing member 38 of the handle 37 is disposed inside the trunk body 31, and the fixing member 38 constitutes a guide body by which movement of the movable locking piece 55 is guided.

### Description of Reference Symbols

10: Vehicle
13: Vehicle-side mount part
30: Trunk
31: Trunk body
32: Lid
37: Handle
38: Fixing member (guide body)
39: Cover (partition member)
40: Trunk engaging/disengaging mechanism
41: Engaging hook
42: Operating lever (operating part)
50: Lock mechanism
51: Key
52: Key cylinder
54: Link
55: Movable locking piece
55h: Slot
56: Fixed locking piece
58: Locking mechanism

## Claims

1. A trunk comprising:
a trunk body (31);
a lid (32) provided so as to be openable and closable relative to the trunk body (31);
a handle (37) fixed to an outer portion of the trunk body (31) or the lid (32) by a fixing member (38); and
a locking mechanism (58) including a fixed locking piece (56) fixed to one of the trunk body (31) and the lid (32), and a movable locking piece (55) which is movably provided on the other of the trunk body (31) and the lid (32) and which is engaged with and disengaged from the fixed locking piece (56) to thereby lock and unlock the lid (32),
wherein the fixing member (38) for the handle (37) is disposed inside the trunk body (31) or the lid (32), and the fixing member (38) constitutes a guide body by which movement of the movable locking piece (55) is guided,
**characterized in that**
the movable locking piece (55) is provided with slots (55h) in which two or more fixing members (38) are relatively slidably fitted, sliding of the movable locking piece (55) is guided by the two or more fixing members (38), the slots (55h) are arranged along a same straight line directed in a sliding direction, and an engaging direction (F) of the movable locking piece (55) and the fixed locking piece (56) is set to be orthogonal to the sliding direction and orthogonal to a fixing direction of fixing by the fixing members (38).

2. The trunk according to claim 1,
wherein an engaging part (58f) between the movable locking piece (55) and the fixed locking piece (56) is provided between the fixing member (38) and the fixing member (38).

3. The trunk according to claim 1 or 2,
wherein a partition member (39) is provided by which the movable locking piece (55) as well as the engaging part (58f) between the movable locking piece (55) and the fixed locking piece (56) is partitioned from an inside space of the trunk.

4. The trunk according to any of claims 1 to 3, further comprising:
a trunk engaging/disengaging mechanism (40) including an engaging hook (41) by which the trunk (30) is detachably mounted to a saddle type vehicle, and an operating part (42) for operating the engaging hook (41); and
a lock mechanism (50) by which an unlocking operation in the locking mechanism (58) and a disengaging operation for disengaging the engaging hook (41) from a vehicle-side mount part (13) are simultaneously restrained, interlockedly with a turning operation of a key (51).

5. The trunk according to claim 4,
wherein the trunk body (31) is made to be larger in capacity as compared to the lid (32), and the handle (37), the movable locking piece (55) and the trunk engaging/disengaging mechanism (40) are provided in the trunk body (31).

6. The trunk according to claim 4 or 5,
wherein the lock mechanism (50) includes a key cylinder (52) turned interlockedly with the turning operation of the key (51), and a link (54) by which a rotating motion of the key cylinder (52) is converted into a sliding motion.

7. The trunk according to claim 6,
wherein an included angle (θ) between the sliding direction of the movable locking piece (55) and a straight line interconnecting linking parts of the link (54) is not more than 45 degrees.

8. The trunk according to claim 6 or 7,
wherein the key cylinder (52) is located outside the trunk body (31), the movable locking piece (55) is located inside the trunk body (31), and the link (54) penetrates a hole (31d) in the trunk body (31) and is provided, outside the hole (31d) in the trunk body (31), with a projected shape (54p) directed downward in the state where the trunk is mounted to the saddle type vehicle.

## Patentansprüche

1. Koffer, welcher aufweist:
einen Kofferkörper (31);
einen Deckel (32), der relativ zu dem Kofferkörper (31) öffen- und
schließbar vorgesehen ist;
einen Griff (37), der an einem Außenabschnitt des Kofferkörpers (31) oder des Deckels (32) durch ein Befestigungselement (38) befestigt ist;
und
einen Schlossmechanismus (58), der ein festes Schlossstück (56), das an einem des Kofferkörpers (31) und des Deckels (32) befestigt ist, und
ein bewegliches Schlossstück (55), das an dem anderen des Kofferkörpers (31) und des Deckels (32) beweglich vorgesehen ist und das mit dem festen Schlossstück (56) in Eingriff steht und davon gelöst wird, enthält, um hierdurch den Deckel (32) zu versperren und zu entsperren,
wobei das Befestigungselement (38) für den Griff (37) innerhalb des Kofferkörpers (31) oder des Deckels (32) angeordnet ist, und das Befestigungselement (38) einen Führungskörper darstellt, durch den die Bewegung des beweglichen Schlossstücks (55) geführt wird,
**dadurch gekennzeichnet, dass**
das bewegliche Schlossstück (55) mit Schlitzen (55h) versehen ist, in denen zwei oder mehr Befestigungselemente (38) relativ verschiebbar eingesetzt sind, wobei das Verschieben des beweglichen Schlossstücks (55) durch die zwei oder mehr Befestigungselemente (38) geführt wird, wobei die Schlitze (55h) entlang der gleichen geraden Linie angeordnet sind, die in der Gleitrichtung weist, und eine Eingriffsrichtung (F) des beweglichen Schlossstücks (55) und des festen Schlossstücks (56) orthogonal zur Gleitrichtung und orthogonal zu einer Befestigungsrichtung der Befestigung durch die Befestigungselemente (38) gelegt ist.

2. Der Koffer nach Anspruch 1, wobei ein Eingriffsteil (58f) zwischen dem beweglichen Schlossstück (55) und dem festen Schlossstück (56) zwischen dem Befestigungselement (38) und dem Befestigungselement (38) vorgesehen ist.

3. Der Koffer nach Anspruch 1 oder 2, wobei ein Trennelement (39) vorgesehen ist, durch das das bewegliche Schlossstück (55) sowie das Eingriffsteil (58f) zwischen dem beweglichen Schlossstück (55) und dem festen Schlossstück (56) von einem l'nnenraum des Koffers abgeteilt ist.

4. Der Koffer nach einem der Ansprüche 1 bis 3, der ferner aufweist:
einen Koffereingriffs/lösemechanismus (40), der einen Eingriffshaken (41) enthält, durch den der Koffer (30) an einem Fahrzeug vom Satteltyp lösbar angebracht ist, sowie ein Betätigungsteil (42) zum Betätigen des Eingriffshakens (41); und
einen Schlossmechanismus (50), durch den ein Entriegelungsvorgang in dem Schlossmechanismus (58) und ein Lösevorgang zum Lösen des Eingriffshakens (41) von einem fahrzeugseitigen Befestigungsteil (13),
gekoppelt mit einer Drehbetätigung eines Schlüssels (51), gleichzeitig verhindert werden.

5. Der Koffer nach Anspruch 4, wobei der Kofferkörper (31) im Vergleich zum Deckel mit einer größeren Kapazität hergestellt ist, und der Griff (37), das bewegliche Schlossstück (55) und der Koffereingriffs/lösemechanismus (40) in dem Kofferkörper (31) vorgesehen sind.

6. Der Koffer nach Anspruch 4 oder 5, wobei der Schlossmechanismus (50) einen Schließzylinder (52) enthält, der gekoppelt mit der Drehbetätigung des Schlüssels (51) gedreht wird, sowie ein Gestänge (54), durch das eine Drehbewegung des Schließzylinders (52) in eine Gleitbewegung umgewandelt wird.

7. Der Koffer nach Anspruch 6, wobei ein Einschlusswinkel (θ) zwischen der Gleitrichtung des beweglichen Schlossstücks (55) und einer geraden Linie, welche Gestängeteile des Gestänges (54) koppelt, nicht mehr als 45° beträgt.

8. Der Koffer nach Anspruch 6 oder 7, wobei der Schließzylinder (52) außerhalb des Kofferkörpers (31) angeordnet ist, das bewegliche Schlossstück (55) innerhalb des Kofferkörpers (31) angeordnet ist, und ds Gestänge (54) ein Loch (31 d) in dem Kofferkörper (31) durchsetzt und, außerhalb des Lochs (31 d) des Kofferkörpers (31), mit einem Vorsprung (54p) versehen ist, der nach unten ausgerichtet ist, in dem Zustand, wo der Koffer an dem Fahrzeug mit Aufsitzsattel angebracht ist.

## Revendications

1. Un coffre comprenant :
un corps de coffre (31) ;
un couvercle (32) conçu de manière à pouvoir s'ouvrir et se fermer par rapport au corps du coffre (31) ;
une poignée (37) fixée à une partie externe du corps du coffre (31) ou du couvercle (32) par un élément de fixation (38) ; et
un mécanisme de verrouillage (58) comprenant une pièce de verrouillage fixe (56) fixée à l'un du corps de coffre (31) et du couvercle (32) et une pièce de verrouillage mobile (55) qui est prévue de manière mobile sur l'autre du corps de coffre (31) et du couvercle (32) et qui s'engage et se désengage de la pièce de verrouillage fixe (56) pour ainsi verrouiller et déverrouiller le couvercle (32),
dans lequel l'élément de fixation (38) pour la poignée (37) est disposé à l'intérieur du corps du coffre (31) ou du couvercle (32) et l'élément de fixation (38) constitue un corps de guidage par lequel le mouvement de la pièce de verrouillage mobile (55) est guidé,
**caractérisé en ce que**
la pièce de verrouillage mobile (55) est dotée de fentes (55h) dans lesquelles deux éléments de fixation (38) ou plus sont ajustés à coulissement relatif, le coulissement de la pièce de verrouillage mobile (55) étant guidé par les deux éléments de fixation (38) ou plus, les fentes (55h) sont disposées le long d'une même ligne droite dirigée dans une direction de coulissement et une direction d'engagement (F) de la pièce de verrouillage mobile (55) et de la pièce de verrouillage fixe (56) est réglée pour être orthogonale à la direction de coulissement et orthogonale à une direction de fixation par les éléments de fixation (38).

2. Le coffre selon la revendication 1,
dans lequel une partie d'engagement (58f) entre la pièce de verrouillage mobile (55) et la pièce de verrouillage fixe (56) est prévue entre l'élément de fixation (38) et l'élément de fixation (38).

3. Le coffre selon l'une des revendications 1 ou 2,
dans lequel un élément de cloisonnement (39) est prévu et permet de séparer la pièce de verrouillage mobile (55) ainsi que la pièce d'engagement (58f) entre la pièce de verrouillage mobile (55) et la pièce de verrouillage fixe (56) d'un espace intérieur du coffre.

4. Le coffre selon l'une des revendications 1 à 3, comprenant par ailleurs :
un mécanisme d'engagement/de désengagement du coffre (40) comprenant un crochet d'engagement (41) par lequel le coffre (30) est fixé de manière amovible à un véhicule du type à selle et une partie opératoire (42) pour actionner le crochet d'engagement (41); et
un mécanisme de verrouillage (50) par lequel une opération de déverrouillage dans le mécanisme de verrouillage (58) et une opération de désengagement pour désengager le crochet d'engagement (41) d'une partie de fixation côté véhicule (13), sont simultanément bloquées et interverrouillées par la rotation d'une clé (51).

5. Le coffre selon la revendication 4,
dans lequel le corps du coffre (31) est conçu pour être d'une capacité supérieure au couvercle (32) et la poignée (37), la pièce de verrouillage mobile (55) et le mécanisme d'engagement/désengagement du coffre (40) sont prévus dans le corps du coffre (31).

6. Le coffre selon l'une des revendications 4 ou 5,
dans lequel le mécanisme de verrouillage (50) comprend un barillet (52) tourné en interverrouillage par la rotation de la clé (51) et un lien (54) par lequel un mouvement de rotation du barillet (52) est converti en un mouvement de coulissement.

7. Le coffre selon la revendication 6,
dans lequel un angle inclus (θ) entre la direction de coulissement de la pièce de verrouillage mobile (55) et une ligne droite reliant les parties de liaison du lien (54) ne dépasse pas 45°.

8. Le coffre selon l'une des revendications 6 ou 7,
dans lequel le barillet (52) est situé à l'extérieur du corps du coffre (31), la pièce de verrouillage mobile (55) est située à l'intérieur du corps du coffre (31) et le lien (54) pénètre un orifice (31 d) dans le corps du coffre (31) et est doté, à l'extérieur de l'orifice (31 d) dans le corps du coffre (31), d'une forme saillante (54p) tournée vers le bas dans l'état dans lequel le coffre est monté sur le véhicule du type à selle.
